# EUROPEAN PATENT APPLICATION

(11) **EP 3 825 338 A1**
(43) Date of publication of application: **26.05.2021**
(21) Application number: 20152019.4
(22) Date of filing: 15.01.2020
(51) Int. Cl.: C08G 18/08, C08G 18/12, C08G 18/44, C08G 18/48, C08G 18/75, C09D 175/06

(54) **POLYURETHANE-UREA DISPERSIONS BASED ON POLYCARBONATE-POLYOLS AS COATING COMPOSITIONS**

(30) Priority: 20.11.2019 WO PCT/CN2019/119658
(71) Applicant: Covestro Intellectual Property GmbH & Co. KG, 51373 Leverkusen (DE)
(72) Inventor: Fan, Zhirong, 40764 Langenfeld (DE); Zhai, Sujuan, Shanghai 201315 (CN); Avtomonov, Evgeny, 51375 Leverkusen (DE)
(74) Representative: Levpat

(57) **Abstract**

The present invention relates to an aqueous polyurethane-urea dispersion comprising at least one polyurethane-urea made of (A1) at least one polyisocyanate, (A2) at least one polycarbonate polyol having a heat flow below 3J/g in the first circle of DSC testing from 20 to 100 °C according to testing method DIN 65467-1999, (A3) optionally, at least one polyether polyol with an OH functionality of 1.8 to 2.2, preferably 2.0, (A4) optionally, at least one compound having a molecular weight of 62 to 400 g/mol and possessing in total two or more hydroxyl and/or amino groups, (A5) optionally, at least one isocyanate-reactive nonionically hydrophilicizing compound, (A6) optionally, at least one isocyanate-reactive, ionically, or potentially ionically, hydrophilicizing compound, (A7) optionally, at least one neutralizing reagents, (A8) optionally, at least one additive, to a process for the preparation of sais aqueous polyurethane-urea dispersion, and to its use as a coating composition.

## Description

The present invention relates to an aqueous polyurethane-urea dispersion comprising at least one polyurethane-urea made of (A1) at least one polyisocyanate, (A2) at least one polycarbonate polyol having a heat flow below 3J/g in the first circle of DSC testing from 20 to 100 °C according to testing method DIN 65467-1999, (A3) optionally, at least one polyether polyol with an OH functionality of 1.8 to 2.2, preferably 2.0, (A4) optionally, at least one compound having a molecular weight of 62 to 400 g/mol and possessing in total two or more hydroxyl and/or amino groups, (A5) optionally, at least one isocyanate-reactive nonionically hydrophilicizing compound, (A6) optionally, at least one isocyanate-reactive, ionically, or potentially ionically, hydrophilicizing compound, (A7) optionally, at least one neutralizing reagents, (A8) optionally, at least one additive, to a process for the preparation of sais aqueous polyurethane-urea dispersion, and to its use as a coating composition, in particular for coating flexible substrates, in particular textiles and/or leather.

Due to environmental concerns, for the coating of flexible substrates, in particular textiles and leather, solvent-containing systems are quickly replaced by low-solvent or solvent-free aqueous systems. The properties required of textile and leather coating systems comprise above all a high resistance to chemicals and water, high mechanical performance and high tensile strength and elasticity. These requirements are largely fulfilled by polyurethane-urea dispersions which are synthesized via self-emulsifying due to hydrophilic groups and can be dispersed in water without the aid of external emulsifiers.

Polyurethane-urea dispersions (PUDs) are used today in a growing number of sectors, which means that the resulting coatings have to meet very diverse requirements. Thus for coating of flexible substrates, leather, in addition to the properties mentioned above, requirements such as the attainment of thick deposits in coat or the production of stable foams are also desirable. The processing steps in the overall coating process can be rationalized and the associated production costs can be reduced in this way.

Furthermore, properties such as good hydrolysis resistance combined with high folding endurance, scratch resistance and abrasion resistance should also be achieved. It has been found that ionic/or non-ionic hydrophilic, aqueous PUDs based on polycarbonate polyols allow coatings with the range of properties mentioned above to be produced on substrates.

However, for certain application, for example, intermediate layer or foam layer for automobile interiors, PUDs with high tensile strength and low modulus are required.

It is known to develop PUDs which have high tensile strength as well as high modulus, especially when crystalized polycarbonate polyols are used in PUDs. For example US 2011/0281998 A1 and US 6,642,303 B2 disclose hydrolysis-stable, aqueous polyurethane-urea dispersions based on polycarbonate-polyols. The polycarbonate-polyols that are used according to this document are at least partly crystalline compounds.

Further, PUDs with low tensile strength and low modulus are also easily developed through simply reducing the amount of hard segments or using polyether polyols to replace polycarbonate polyols and polyester polyols. But, up to now, it is a challenge to develop PUDs with high tensile strength and low modulus at the same time, because normally tensile strength changes in the same way as that of modulus.

It is therefore an object of the present invention to provide aqueous polyurethane-urea dispersions useful as coating compositions for flexible substrates, wherein coatings that are obtained from these polyurethane-urea dispersions shall have low modulus and high tensile strength at the same time, so that these coating compositions may advantageously be applied in many areas, for example, upholstered furniture, industrial safety and car interior trim, in particular with very good wrinkle resistance and super comfort.

The present invention therefore relates to an Aqueous polyurethane-urea dispersion comprising at least one polyurethane-urea made of:
(A1) at least one polyisocyanate,
(A2) at least one polycarbonate polyol having a heat flow below 3J/g in the first circle of DSC testing from 20 to 100 °C according to testing method DIN 65467-1999,
(A3) optionally, at least one polyether polyol with an OH functionality of 1.8 to 2.2, preferably 2.0,
(A4) optionally, at least one compound having a molecular weight of 62 to 400 g/mol and possessing in total two or more hydroxyl and/or amino groups,
(A5) optionally, at least one isocyanate-reactive nonionically hydrophilicizing compound,
(A6) optionally, at least one isocyanate-reactive, ionically, or potentially ionically, hydrophilicizing compound,
(A7) optionally, at least one neutralizing reagents,
(A8) optionally, at least one additive.

The single components that are (optionally) present in the polyurethane-urea according to the present invention are explained in detail in the following:

### Component (A1):

Suitable polyisocyanates used as component (A1) are the aliphatic or cycloaliphatic polyisocyanates which are in general known in the art. They can be used individually or in any desired mixtures with one another.

Preferred examples of suitable polyisocyanates are selected from the group consisting of butylene 1,4-diisocynate, 1,6-diisocyanatohexane (HDI), 2-methyl-1,5-diisocyanatopentane, 1,5-diisocyanato-2,2-dimethylpentane, 2,2,4- or 2,4,4,-trimethyl-1,6-diisocyanatohexane, 1,10-diisocyanatohexane, 1,3- and 1,4- diisocyanatohexane, 1,3- and 1,4-bis(isocyanatomethyl) cyclohexane, 1-isocyanato-3,3,5-trimethyl-5-isocyanatomethyl cyclohexane (isophorone diisocyanate, IPDI), 4,4'-diisocyanatodi-cyclohexylmethane, 1-isocyanato-1-methyl-4 (3) isocyanatomethyl cyclohexane and mixtures thereof.

Particularly, polyisocyanates or polyisocyanate blends based on 1,6-diisocyanatohexane (HDI), 1-isocyanato-3,3,5-trimethyl-5-isocyanatomethyl cyclohexane (isophorone diisocyanate, IPDI) and/or 4,4'-diisocyanatodicyclohexyl methane are preferred.

Processes for the preparation of the above-mentioned polyisocyanates are in general known to the person having ordinary skill in the art.

The polyurethane-urea present in the dispersion according to the present invention preferably comprises component (A1) in an amount of 15 to 25% by weight, particularly preferably 15 to 22 % by weight, in each case based on the total mass of the polyurethane-urea.

### Component (A2):

Suitable polycarbonate polyols suitable as component (A2) can be obtained according to processes known to the skilled artisan, for example by the reaction of carbon acid derivatives, e.g. diphenyl carbonate, dimethyl carbonate or phosgene, with diols. Suitable diols are, in general, selected form the group consisting of 1,5-pentanediol and 1,6-hexanediol and mixtures thereof.

Particularly preferred, the present invention relates to the aqueous dispersion according to the present invention, wherein a mixture 1,5-pentanediol and 1,6-hexandiol at a ratio of 35:65 to 50:50, preferably 40:60 to 50:50, is used.

It is an essential feature of the dispersion according to the present invention that the polycarbonates polyol that are used to prepare the polyurethane-urea are amorphous polycarbonate polyols which have heat flow of 0 to 3J/g in the first circle of DSC testing from 20 to 100 °C according to testing method DIN 65467-1999.

In addition the at least one polycarbonate polyol used as component (A2) preferably has a number-average molecular weight of 1000 to 3000 g/mol, particularly preferably 1000 to 2500 g/mol, measured at 23 °C by gel permeation chromatography with tetrahydrofuran as the mobile phase and comparing to the reference material polystyrene.

According to a preferred embodiment of the present invention, component A2 has a hydroxyl number of 112 to 56 mg KOH/g, determined by standard acid-base titration at 23 °C.

According to a preferred embodiment of the present invention, component A2 has an OH functionality of 1.8 to 2.2.

According to a preferred embodiment of the present invention the polycarbonate polyols used as components (A2) are based on diols selected from the group consisting of 1,5-pentanediol, 1,6-hexanediol and mixtures thereof.

The polyurethane-urea present in the dispersion according to the present invention preferably comprises component (A2) in an amount of 15 to 67.5% by weight, particularly preferably 15 to 50 % by weight, in each case based on the total mass of the polyurethane-urea.

### Component (A3):

The polyurethane-urea dispersion according to the present invention optionally comprises at least one polyether polyol with an OH functionality of 1.8 to 2.2, preferably 2.0.

The polyurethane-urea present in the dispersion according to the present invention comprises component (A3) as an optional component. According to a preferred embodiment of the present invention, the polyurethane-urea present in the dispersion according to the present invention comprises component (A3).

Suitable polyether polyols with an OH functionality of 1.8 to 2.2, preferably 2.0, preferably used as component (A3) are polyethers known in polyurethane chemistry, such as polyols based on alkylene oxides selected from the group consisting of styrene oxide, propylene oxide, butylene oxides, epichlorohydrin and mixtures thereof, particularly of propylene oxide and/or butylene oxides, wherein the polyether polyols are obtained by reaction of the mentioned alkylene oxides and suitable starter molecules.

Suitable starter molecules are, for example, selected from the group consisting of propylene glycol, ethylene glycol and mixtures thereof.

Polyether polyols used as component (A3) preferably have a number-average molecular weight of 224 to 28 g/mol, preferably 112 to 56 g/mol.

Polyether polyols used as component (A3) preferably have a hydroxyl number of 500 to 4000 mg KOH/g, preferably 800 to 3000 mg KOH/g, determined by standard acid-base titration at 23 °C.

According to a preferred embodiment of the present invention the polyether polyols used as components (A3) are selected from the group consisting of poly-tetrahydrofurane (PTHF), polypropylene glycol (PPG) and mixtures thereof.

The polyurethane-urea present in the dispersion according to the present invention preferably comprises component (A3) in an amount of 0 to 65% by weight, preferably 10 to 65 % by weight, in each case based on the total mass of the polyurethane-urea.

### Component (A4):

The polyurethane-urea dispersion according to the present invention optionally comprises at least one compound having a molecular weight of 62 to 400 g/mol and possessing in total two or more hydroxyl and/or amino groups as component (A4).

The polyurethane-urea present in the dispersion according to the present invention comprises component (A4) as an optional component. According to a preferred embodiment of the present invention, the polyurethane-urea present in the dispersion according to the present invention comprises component (A4).

Component (A4) is at least one compound having a molecular weight of 62 to 400 g/mol and possessing in total two or more hydroxyl and/or amino groups.

Components (A4) contained in the PU dispersions according to the invention have a molecular weight 62 to 400 g/mol and are preferably used as chain extenders.

Preferred components (A4) are selected from the group consisting of alkane diols, such as ethanediol, 1,2- and 1,3-propanediol, 1,4-butanediol, 2,3-butanediol, 1,5-pentanediol, 1,3-dimethyl propanediol, 1,6-hexanediol, neopentyl glycol, cyclohexane dimethanol, 2-methyl-1,3-propanediol, ether diols, such as diethylene diglycol, triethylene glycol or hydroquinone dihydroxyethyl ether, c) ester diols of formulae (I) or (II),

HO-(CH2)x-CO-O-(CH2)y-OH (I),

HO-(CH2)-O-CO-R-CO-O(CH2)x-OH (II),

wherein in which
R is an alkylene or arylene radical with 1 to 10 C atoms, preferably 2 to 6 C atoms,
x is 2 to 6 and
y is 3 to 5,
and polyamines such as ethylene diamine, 1,2- and 1,3- diaminopropane, 1,4-diaminobutane, 1,6-diaminohexane, isophorone diamine, isomer mixture of 2,2,4- and 2,4,4- trimethyl hexamethylene diamine, 2-methyl pentamethylene diamine, diethylene triamine, 1,3- and 1,4-xylylene diamine, α,α,α',α'-tetramethyl-1,3- and -1,4-xylylene diamine and 4,4-diaminodicyclohexyl methane, diamines such as hydrazine, hydrazine hydrate, substituted hydrazines, such as N-methyl hydrazine, N,N'-dimethyl hydrazine and homologues thereof, acid dihydrazides, adipic acid, β-methyl adipic acid, sebacic acid, hydracrylic acid and terephthalic acid, semicarbazidoalkylene hydrazides, such as β -semicarbatidopropanoic acid hydrazide, semicarbazidoalkylene carbazine esters, such as 2-semicarbazidoethyl carbazine ester or aminosemicarbazide compounds, such as β-aminoethyl semicarbazidocarbonate. and mixtures thereof.

According to a preferred embodiment, components (A3) and/or (A4) can contain double bonds, which can be derived, for example, from long-chain aliphatic carboxylic acids or fatty alcohols. A functionalisation with olefinic double bonds is possible, e.g. by the incorporation of allylic groups or acrylic acid or methacrylic acid and esters thereof.

Preferred polyurethane-urea dispersions according to the invention contain one or more compounds (A3) and/or (A4).

The polyurethane-urea present in the dispersion according to the present invention preferably comprises component (A4) in an amount of 0 to 5.5% by weight, particularly preferably 0.1 to 4.0 % by weight, in each case based on the total mass of the polyurethane-urea.

### Component (A5):

The polyurethane-urea present in the dispersion according to the present invention optionally comprises as component (A5) at least one isocyanate-reactive nonionically hydrophilicizing compound.

According to a preferred embodiment, the polyurethane-urea present in the dispersion according to the present invention contains hydrophilic polyoxyalkylene ethers as component (A5), particularly preferably having at least one hydroxyl or amino group in quantities of 0 to 3.0% by weight, relative to the solids content of the polyurethane-urea dispersion according to the present invention, preferably to support the dispersive action.

These preferred polyethers preferably contain a high proportion, e.g. 30 to 100 % by weight, of structural elements derived from ethylene oxide, e.g. ethoxylated monohydric alcohols or ethoxylated phenols. Suitable monohydric alcohols are preferably selected from the group consisting of mehanol, ethanol, propanol, butanol and mixtures thereof.

Preferred examples include linear polyethers with functionality of 1 to 3, but also compounds having general formula (III), 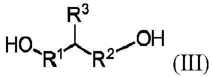 wherein
R1 and R2 are mutually independently selected from a divalent aliphatic, cycloaliphatic or aromatic radical having 1 to 18 C atoms, which can be interrupted by oxygen and/or nitrogen atoms, and
R3 represents a non-hydroxy-terminated polyester or preferably polyether, particularly preferably an alkoxy-terminated polyethylene oxide radical.

According to a preferred embodiment, the polyurethane-urea present in the dispersion according to the present invention comprises component (A5).

The polyurethane-urea present in the dispersion according to the present invention preferably comprises component (A5) in an amount of 1,5 to 5.0 % by weight, particularly preferably 1.5 to 3.0 % by weight, in each case based on the total mass of the polyurethane-urea.

### Component (A6):

The polyurethane-urea present in the dispersion according to the present invention optionally comprises as component (A6) at least one isocyanate-reactive, ionically or potentially ionically, hydrophilicizing compound.

According to the present invention, by ionically or potentially ionically, hydrophilicizing compounds are meant all compounds which contain at least one isocyanate-reactive group and also at least one functionality, such as -COOY, -SO₃Y, -PO(OY)₂, wherein Y is, for example, a hydrogen, an ammonium NH4+ and/or a metal cation, -NR₂, -NR₃⁺, wherein R is hydrogen, C₁-C₁₈-alkyl and/or C₅-C₁₈-aryl, which on interaction with aqueous media, enters into a pH-dependent dissociation equilibrium and in that way may carry a negative, positive or neutral charge. Preferred isocyanate-reactive groups are hydroxyl or amino groups.

Suitable ionically or potentially ionically hydrophilicizing compounds corresponding to the definition of component (A6) are, for example, selected from the group consisting of mono- and dihydroxycarboxylic acids, mono- and diaminocarboxylic acids, mono- and dihydroxysulphonic acids, mono- and diaminosulphonic acids and also mono- and dihydroxyphosphonic acids or mono- and diaminophosphonic acids and their salts, such as dimethylolpropionic acid, dimethylolbutyric acid, hydroxypivalic acid, N-(2-aminothyl)-β-alanine, 2-(2-aminoethylamino) ethanesulphonic acid, ethylenediamine-propyl- or butylsulphinic acid, citric acid, glycolic acid, lactic acid , glycine, alanine, taurine, lysine, 3,5-diaminobenzoic acid, an adduct of IPDI and acrylic acid and its alkali metal and / or ammonium salts; the adduct of sodium bisulphite with but-2-ene-1,4-diol, polyethersulphonate, the preopoxylated adduct of 2-butenediol and NaHSO₃ and also compounds which contain units which can be converted into cationic groups, examples being amine-based units, such as N-methyldiethanolamine, as hydrophilic synthesis components, and mixtures thereof. It is further possible to use cyclohexylaminopropanesulphonic acid (CAPS).

Preferred ionic or potential ionic components (A6) are those which possess carboxyl or carboxylate and/or sulphonate groups and/or ammonium groups. Particularly preferred ionic components (A6) are those containing carboxyl and/or sulphonate groups as ionic or potentially ionic groups, such as the salts of N-(2-aminoethyl)-β-alanine, of 2-(2-aminoethylamino) ethane sulphonic acid or of the adduct of IPDI and acrylic acid and also of dimethylolpropionic acid.

According to a preferred embodiment, the polyurethane-urea present in the dispersion according to the present invention comprises component (A6).

The polyurethane-urea present in the dispersion according to the present invention preferably comprises component (A6) in an amount of 0.5 to 2.5% by weight, particularly preferably 0.1 to 1.5 % by weight, in each case based on the total mass of the polyurethane-urea.

According to a further preferred embodiment, the polyurethane-urea present in the dispersion according to the present invention comprises either component (A5) or component (A6).

According to a further preferred embodiment, the polyurethane-urea present in the dispersion according to the present invention comprises component (A5) and component (A6).

### Component (A7):

The polyurethane-urea present in the dispersion according to the present invention comprises as an optional component (A7) at least one neutralizing reagent. According to a preferred embodiment of the present invention, the polyurethane-urea present in the dispersion according to the present invention comprises component (A7).

Suitable neutralizing reagents according to the present invention are for example tertiary amines comprising at least one selected from the group consisting of triethylamine, dimethylethanolamine, N-methylmorpholine, alkalimetal hydroxide solution and mixtures thereof. A solution of potassium hydroxide in water is preferred as component (A7).

The polyurethane-urea present in the dispersion according to the present invention preferably comprises component (A7) in an amount of 0 to 2.0% by weight, particularly preferably 0.1 to 1.0 % by weight, in each case based on the total mass of the polyurethane-urea.

### Component (A8):

The polyurethane-urea present in the dispersion according to the present invention comprises as an optional component (A8) at least one additive. According to a preferred embodiment of the present invention, the polyurethane-urea present in the dispersion according to the present invention comprises component (A8).

Suitable additives according to the present invention are those known for polyurethanes and polyurethane dispersions used as light stabilizers and antioxidants.

Preferred light stabilizers are sterically hindered phenols (phenolic antioxidants) and/or sterically hindered amines based on 2,2,6,6-tetramethylene piperidine (hindered amine light stabilizers, HALS light stabilizers). For example, Irganox 1010 (Ciba Spezialitaten GmbH, Lampertheim, Del.) and/or Tinuvin 765 (Ciba Spezialitaten GmbH, Lampertheim, Del.) are particularly preferred.

The polyurethane-urea dispersions according to the present invention can also contain other auxiliary substances and additives known for polyurethane dispersions, such as emulsifiers, defoaming agents, thickeners. Finally fillers, plasticizers, pigments, carbon black and silica sols, aluminium, clay and asbestos dispersions can also be incorporated.

The polyurethane-urea present in the dispersion according to the present invention preferably comprises component (A8) in an amount of 0 to 3% by weight, particularly preferably 0 to 2 % by weight, in each case based on the total mass of the polyurethane-urea.

Particularly preferably, the present invention relates to the dispersion according to the present invention, wherein components (A1) to (A8) are present in the following amounts:
(A1) 15 to 25% by weight, preferably 15 to 22 % by weight,
(A2) 15 to 67.5% by weight, preferably 15 to 50 % by weight,
(A3) 0 to 65% by weight, preferably 10 to 65 % by weight,
(A4) 0 to 5.5% by weight, preferably 0.1 to 4.0 % by weight,
(A5) 0 to 5.0% by weight, preferably 1.5 to 5.0% by weight, particularly preferably 1.5 to 3.0 % by weight,
(A6) 0 to 2.5% by weight, preferably 0.5 to 2.5% by weight, particularly preferably 0.1 to 1.5 % by weight,
(A7) 0 to 2.0% by weight, preferably 0.1 to 1.0 % by weight, and
(A8) 0 to 3 % by weight, preferably 0 to 2 % by weight,
wherein the sum of the amounts of (A1) to (A8) is 100% by weight in each case.

The solids content of the polyurethane-urea dispersions according to the invention is in general from 10 to 70% by weight, preferably 35 to 70% by weight, particularly preferably 50 to 60% by weight, in each case in respect of the whole dispersion.

The present invention also relates to a process for the production of the ionic and/or non-ionic hydrophilic, aqueous PU dispersions according to the invention comprising first reacting components (A1), (A2) and optionally components (A3), (A4), (A5), (A6) and (A7) to form a polyurethane prepolymer, then dispersing the polyurethane prepolymer in or by addition of water and then optionally reacted with (A8).

The NCO/OH ratio in the production of the polyurethane prepolymer is preferably 1.2/1 to 2.8/1, particularly preferably 1.4/1 to 2.5/1, more preferably 1.6/1 to 2.3/1 and most particularly preferably 1.8/1 to 2.2/1.

In the first step of the process according to the invention components (A1), (A2) and optionally components (A3), (A4), (A5), (A6), (A7) are reacted to obtain a polyurethane-urea dispersion, optionally with the aid of an organic solvent.

Suitable solvents include the known paint solvents, preferably selected from the group consisting of ethyl acetate, butyl acetate, 1-methoxypropyl-2-acetate, 3-methoxy-n-butyl acetate, acetone, 2-butanone, 4-methyl-2-pentanone, cyclohexanone, toluene, xylene, chlorobenzene, white spirit carbonic acid esters, such as dimethyl carbonate, diethyl carbonate, 1,2-ethylene carbonate and 1,2-propylene carbonate, lactones, such as β-propiolactone, γ-butyrolactone, ε-caprolactone, ε-methyl caprolactone, propylene glycol diacetate, diethylene glycol dimethyl ether, dipropylene glycol dimethyl ether, diethylene glycol ethyl and butyl ether acetate, N-methyl pyrrolidone and N-methyl caprolactam, and mixtures thereof.

In a further step of the process according to the present invention, groups capable of neutralisation are converted to the salt form and the dispersion is produced using water.

Depending on the degree of neutralisation and the content of ionic groups, the dispersion according to the present invention can be formulated to have a very fine-particle character, such that it has the appearance of a solution. Coarse-particle formulations, which are likewise sufficiently stable, are also possible, however. The solvent that is optionally used can be removed by distillation following dispersion.

All methods known from the prior art, such as emulsifier shear force, acetone, prepolymer mixing, melt emulsification, ketamine and spontaneous solids dispersion methods or derivatives thereof can be used to produce the polyurethane dispersions according to the present invention. The melt emulsification and acetone methods are preferred. The acetone method is particularly preferred.

Excess isocyanate groups are preferably reacted by reaction with polyfunctional isocyanate-reactive compounds, preferably to obtain a chain extension. Water or the polyamines already cited as component (A4) are preferably used for this purpose, particularly preferably diamines and triamines, hydrazine and the sodium salt of 2-(2-aminoethyl amino) ethane sulfonic acid. Termination with a monoamine or monoalcohol such as diethylamine, dibutylamine, ethanolamine, N- ethyl ethanolamine or N, N-diethanol amine is also possible.

In order to use the polyurethane-urea dispersion according to the invention as coating compositions, the polyurethane-urea dispersion according to the invention can be used either alone or in combination with other aqueous binders. Such aqueous binders can be synthesized from polyester, polyacrylate, polyepoxy or polyurethane polymers. It is likewise possible for the polyurethane-urea dispersion according to the invention to be blended with other anionic or non-ionic dispersions, such as polyvinyl acetate, polyethylene, polystyrene, polybutadiene, polyvinyl chloride, polyacrylate and copolymer dispersions.

The polyurethane-urea dispersion according to the invention are stable, capable of being stored and hipped, and can be processed at any later date.

The conventional auxiliary substances and additives used in textile coating technology, such as pigments, flow control agents, UV stabilizers, antioxidants, fillers, plasticisers, carbon black and silica sols, aluminum, clay, asbestos dispersions or thixotropic agents, can also be added to the polyurethane-urea dispersion according to the invention. In this way ready-to-use aqueous coating compositions are obtained that have a virtually unlimited shelf life at room temperature and cure at relatively low temperatures of 120 to 150 °C, preferably within 2 to 3 minutes to form coatings with in particular very good wet adhesion properties.

Depending on the desired properties and intended use of the coating compositions according to the present invention, up to 70% by weight, relative to total dry solids, of such fillers can be contained in the end product. Because of their excellent foaming characteristics and good abrasion resistance, scratch resistance, folding endurance and hydrolysis resistance, the polyurethane-urea dispersion according to the invention, in particular those having solids contents greater than 50% by weight, are especially suitable for applications in the area of upholstered furniture, industrial safety and car interior trim, and for the production of very stable thick foam deposits in a single coat, such as can otherwise be achieved only with high solids coating compositions.

Suitable substrates are, for example, woven and nonwoven textiles, leather, paper, hard fibre, straw, papery materials wood, and glass, all types of plastics, ceramics, stone, concrete, bitumen, porcelain, metals or glass fibres. Preferred substrates are flexible substrates, with textiles and leather being particularly preferred.

The polyurethane-urea dispersion according to the invention or the pastes produced from them as coating compositions may preferably be applied to a porous substrate that subsequently remains bonded to the end product, such as woven or nonwoven textiles or fibrous mats, felts or bonded fabrics, also paper webs, expanded films or split leathers, the suction from which brings about an immediate solidification of the coating. The coating is then preferably dried at elevated temperature and optionally moulded. However, drying can also be performed on smooth porous or non-porous materials, such as glass, paper, card, ceramic materials, metal, silicone rubber, aluminum foil. The finished flat material is then preferably peeled off and either used as it is or applied to a substrate using the reverse coating method, by gluing, flame lamination or calendaring.

The polyurethane-urea dispersion according to the invention can perform various functions, e.g. imparting antistatic and crease-resistant properties, as a binder for bonded fabrics, as adhesives, bonding agents, laminating agents, water repellents, plasticizers, binders, as auxiliary substances in textile printing and in the paper industry, as an additive for polymers, as a size, e.g. for glass fibres and for leather finishing.

If the polyurethane-urea dispersion according to the present invention is used as a coating composition, it can be applied by spreading it directly onto the substrate using, for example, doctor blades, rolls or wire blades. Several layers, but preferably two, are generally applied in succession. The subsequently applied top coat protects the entire composite against mechanical loading and abrasion. Application of the coating composite comprising base coat and top coat can also be performed using the so-called reverse coating method, however. In this method the top coat is first applied to a release backing and dried. After application of a second base coat or anchor coat, the textile substrate is gently pressed into the coat whilst still wet. After it has dried, a permanent composite comprising coating and substrate is formed, which is detached from the release backing and which in terms of its structure largely corresponds to that produced by the direct coating method described above.

The products obtained by various application methods can be dried at room temperature or at elevated temperature. The drying temperature to be chosen in the individual case, which apart from the chemical composition of the material depends primarily on the moisture content, drying time and film thickness, can easily be determined by means of a preliminary test. For a given heating period the drying temperature must always be below the solidification temperature.

The flat material can subsequently be coated with a finish to increase the resistance of its surface. Aqueous dispersions or solutions are preferably also used for this purpose.

The present invention therefore also, relates to the use of an aqueous polyurethane-urea dispersion according to the present invention as a coating composition. Suitable methods and possible further additives of such a coating composition are mentioned above.

Preferably, the present invention relates to this use, wherein woven and nonwoven textiles, leather, paper, hard fibre, straw, papery materials wood, and glass, all types of plastics, ceramics, stone, concrete, bitumen, porcelain, metals or glass fibres are coated, in particular flexible substrates, with textiles and leather being particularly preferred.

### Examples

### Test methods:

All quantitative data, proportions and percentages, unless otherwise specified, are based on the weight and the total quantity of on the total weight of the compositions.

Unless stated otherwise, all analytical measurements refer to measurements at a temperature of 23 °C.

NCO contents were determined volumetrically in accordance with DIN-EN ISO 11909-1998, unless expressly mentioned otherwise.

The solid contents were determined with a moisture analyzer (instrument: Mettler Toledo HS153, Metter-Toledo Instruments Co., Ltd.).

pH values of the PU dispersions were determined using a pH meter (instrument: Sartorius pH meter PB-10, Sartorius Scientific Instruments (Beijing) Co., Ltd.).

The average particle sizes (the number average is stated) of the PU dispersions were determined using laser correlation spectroscopy (instrument: Malvern Zetasizer Nano ZS 3600, Malvern Instr. Limited).

The viscosities given were determined by rotational viscometry in accordance with DIN 53019-1-2008 at 23 °C with a rotational viscometer (instrument: Brookfield DV-II+ Pro, Ametek Commercial Enterprise (Shanghai) Co., Ltd.).

The physical properties of coating films based on the polyurethane-urea dispersions were determined on free films produced as follows:
To determine tensile and elongation, free films are prepared. To do this, a thickener (here, Borchi Gel ALA) is used to thicken PUDs in such a way that the coating just remains free-flowing. The quantity of thickener is based on the PUDs initial viscosity. An applicator is then used to apply the thickened PUDs with a 300 to 500 µm wet film thickness onto the backing paper. After a flash-off time of around 15 minutes, drying is performed as follows: 1.5 hours at 50 °C; 30 minutes at 70 °C; 3 minutes at 150 °C. After forced drying and one day of storage at room temperature, the coating film is removed from the backing paper, and 3 to 5 test specimens are punched out using a punch.

The tensile test is based on DIN 53504-1994, which is performed in a standard atmosphere, 23 °C and 50 % rel. humidity using a tensile testing device. The test specimens are in strip or dumbbell form. The film thickness should be as uniform as possible and not exhibit any holes, bubbles or cracks. Elongation at break in %, tensile strength in N/mm², and 100% modulus in N/mm² were determined according to DIN 53504-1994.

Substances and Abbreviations Used:
Desmophen C 2200: Polycarbonate based on 1,6-hexanediol, OH number 56, molecular weight 2000 g/mol, Covestro Deutschland AG, Leverkusen
Desmophen C 2613: Polycarbonate based on 1,4-butanol and 1,6-hexanediol, OH number 56, molecular weight 2000 g/mol, Covestro Deutschland AG, Leverkusen
Desmophen C 3200: Polycarbonate based on 1,5-pentyl glycol and 1,6-hexanediol, OH number 56, molecular weight 2000 g/mol, Covestro Deutschland AG, Leverkusen
Desmophen C 3100: Polycarbonate based on 1,5-pentyl glycol and 1,6-hexanediol, OH number 112, molecular weight 1000 g/mol, Covestro Deutschland AG, Leverkusen
PolyTHF 1000: Polytetramethylene glycol polyol, OH number 112, molecular weight = 1000 g/mol., BASF Chemicals CO., Ltd.
PolyTHF 2000: Polytetramethylene glycol polyol, OH number 56, molecular weight 2000 g/mol, BASF Chemicals CO., Ltd.
Desmophen 3600: Polypropylene oxide polyether, OH number 56, molecular weight 2000 g/mol, Covestro Deutschland AG, Leverkusen
Polyether LB 25: Monofunctional polyethylene glycol, OH number 25, molecular weight 2250 g/mol, Covestro Deutschland AG, Leverkusen
Desmophen 1652: Polyester based on adipic acid, monoethyleneglycol, 1,4-butanediol, and diethyleneglycol, OH number 53, molecular weight 2100 g/mol, Covestro Polymers (China) Co., Ltd., Shanghai
PE 170 HN: Polyester based on adipic acid, neopentyl glycol and 1,6-hexanediol, OH number 66, molecular weight 1700 g/mol, Covestro Polymers (China) Co., Ltd., Shanghai
Desmodur I: 3-isocyanatomethyl-3,5,5-trimethyl cyclohexyl isocyanate, NCO content 37.8%, molecular weight 222 g/mol, Covestro Polymers (China) Co., Ltd.
Desmodur H: 1,6-Hexamethylene Diisocyanate, NCO content 50%, molecular weight 168 g/mol, Covestro Polymers (China) Co., Ltd.
Desmodur W: dicyclohexylmethane-4,4'-diisocyanate, molecular weight 262 g/mol, Covestro Polymers (China) Co., Ltd.
Neopentylglycol: molecular weight 104 g/mol, Sigma-Aldrich (Shanghai) Trading Co., Ltd
Baybond VP LS 2387: Diaminosulfonate, 45% by weight in water, amine number 266, molecular weight 422 g/mol, Covestro Deutschland AG, Leverkusen
KV 1386: Diaminocarbonate, 40% in water, amine number 244, molecular weight 387.88 g/mol, Covestro Deutschland AG, Leverkusen
Hydrazine Hydrate 64% in water, molecular weight 50.06 as supplied, Sigma-Aldrich (Shanghai) Trading Co., Ltd
IPDA: 3-aminomethyl-3,5,5-trimethylcyclohexyl amine, molecular weight 170.3 as supplied, Sigma-Aldrich (Shanghai) Trading Co.,Ltd
Diethylenetriamine: molecular weight 103 g/mol, Sigma-Aldrich (Shanghai) Trading Co., Ltd Trimethylamine: molecular weight 101 g/mol, Sigma-Aldrich (Shanghai) Trading Co., Ltd
Carbohydrazide: molecular weight 90.08 g/mol, as supplied, Sigma-Aldrich (Shanghai) Trading Co., Ltd
KOH: molecular weight 56.00 g/mol, as supplied, Sigma-Aldrich (Shanghai) Trading Co., Ltd

### Example 1.1 (According to the invention):

The mixture of 155.5 g of Desmophen C 3200, 198.6 g of PTHF 2000, 86.55 g of PTHF 1000 and 16.2 g of Polyether LB 25 was combined with 58.69 g of Desmodur I and 49.00 g of Desmodur H at 70 °C, heated up to 120 °C and stirred at 120 °C until a constant NCO value of 3.31% by weight was achieved. The prepolymer was dissolved with 1259.62 g of acetone below 90 °C and stirred for 20 minutes. A mixture of 1.23 g of hydrazine Hydrate, 13.20 g of diaminosulfonate and 52.65 g of water was added at 40 °C within 5 minutes and stirred for 20 minutes. A mixture of 20.81 g of IPDA and 100.59 g of water was added at 40 °C within 8 minutes. 255.7 g of water was added at 40 °C within 15 minutes and mixed for 5 minutes before acetone was distilled. The final dispersion was filtered through 260 micron filter.

Dispersion with a solid content of 60.48% by weight, viscosity of 839.8 cps at 23 °C, pH of 7.11, and mean particle size of 369.3 nm was obtained.

### Example 1.2 (According to the invention):

The mixture of 97.75 g of Desmophen C 3100, 198.6 g of PTHF 2000, 86.55 g of PTHF 1000 and 16.2 g of Polyether LB 25 was combined with 58.69 g of Desmodur I and 49.00 g of Desmodur H at 70 °C, heated up to 120 °C and stirred at 120 °C until a constant NCO value of 4.36% by weight was achieved. The prepolymer was dissolved with 1085.43 g of acetone below 90 °C and stirred for 20 minutes. A mixture of 1.23 g of hydrazine Hydrate, 13.20 g of diaminosulfonate and 52.65 g of water was added at 40 °C within 5 minutes and stirred for 20 minutes. A mixture of 20.81 g of IPDA and 130.59 g of water was added at 40 °C within 8 minutes. 197.2 g of water was added at 40 °C within 15 minutes and mixed for 5 minutes before acetone was distilled. The final dispersion was filtered through 260 micron filter.

Dispersion with a solid content of 61.21% by weight, viscosity of 1456 cps at 23 °C, pH of 7.72, and mean particle size of 846.6 nm was obtained.

### Example 2.1 (According to the invention):

The mixture of 137.95 g of Desmophen C 3200, 225.74 g of PTHF 2000, 101.29 g of Desmophen 3600, 1.72 g of DMPA and 14.58 g of Polyether LB 25 was combined with 50.42 g of Desmodur I and 39.5 g of Desmodur H at 70 °C, heated up to 120 °C and stirred at 120 °C until a constant NCO value of 2.32% by weight was achieved. The prepolymer was dissolved with 1183.49 g of acetone below 90 °C and stirred for 20 minutes. 5.37 g of 10 wt.% KOH solution in water was added at 40 °C and stirred for 10 minutes. A mixture of 30.12 g of 10 wt.% carbohydrazide solution in water, 12.27 g of KV 1386 and 21.15 g of water was added at 40 °C within 5 minutes and stirred for 20 minutes. A mixture of 19.23 g of IPDA and 117.53 g of water was added at 40 °C within 8 minutes. 255.7 g of water was added at 40 °C within 15 minutes and mixed for 5 minutes before acetone was distilled. The final dispersion was filtered through 260 micron filter.

Dispersion with a solid content of 51.29% by weight, viscosity of 348.9 cps at 23 °C, pH of 7.2, and mean particle size of 205.7 nm was obtained.

### Comparative example 1.1:

The mixture of 155.5 g of Desmophen C 2200, 198.6 g of PTHF 2000, 86.55 g of PTHF 1000 and 16.2 g of Polyether LB 25 was combined with 58.69 g of Desmodur I and 49.00 g of Desmodur H at 70 °C, heated up to 120 °C and stirred at 120 °C until a constant NCO value of 3.29% by weight was achieved. The prepolymer was dissolved with 1259.62 g of acetone below 90 °C and stirred for 20 minutes. A mixture of 1.23 g of hydrazine Hydrate, 13.20 g of diaminosulfonate and 52.65 g of water was added at 40 °C within 5 minutes and stirred for 20 minutes. A mixture of 20.81 g of IPDA and 130.59 g of water was added at 40 °C within 8 minutes. 255.7 g of water was added at 40 °C within 15 minutes and mixed for 5 minutes before acetone was distilled. The final dispersion was filtered through 260 micron filter.

Dispersion with a solid content of 62.96% by weight, viscosity of 1740 cps at 23 °C, pH of 8.48, and mean particle size of 482.7 nm was obtained.

### Comparative example 1.2:

The mixture of 155.5 g of Desmophen C 2613, 198.6 g of PTHF 2000, 86.55 g of PTHF 1000 and 16.2 g of Polyether LB 25 was combined with 58.69 g of Desmodur I and 49.00 g of Desmodur H at 70 °C, heated up to 120 °C and stirred at 120 °C until a constant NCO value of 3.24% by weight was achieved. The prepolymer was dissolved with 1259.62 g of acetone below 90 °C and stirred for 20 minutes. A mixture of 1.23 g of hydrazine Hydrate, 13.20 g of diaminosulfonate and 52.65 g of water was added at 40 °C within 5 minutes and stirred for 20 minutes. A mixture of 20.81 g of IPDA and 130.59 g of water was added at 40 °C within 8 minutes. 255.7 g of water was added at 40 °C within 15 minutes and mixed for 5 minutes before acetone was distilled. The final dispersion was filtered through 260 micron filter.

Dispersion with a solid content of 60.53% by weight, viscosity of 2399 cps at 23 °C, pH of 6.83, and mean particle size of 260.1 nm was obtained.

### Comparative example 1.3:

The mixture of 133.18 g of PE 170 HN, 198.6 g of PTHF 2000, 86.55 g of PTHF 1000 and 16.2 g of Polyether LB 25 was combined with 58.69 g of Desmodur I and 49.00 g of Desmodur H at 70 °C, heated up to 120 °C and stirred at 120 °C until a constant NCO value of 3.62% by weight was achieved. The prepolymer was dissolved with 1207.36 g of acetone below 90 °C and stirred for 20 minutes. A mixture of 1.23 g of hydrazine Hydrate, 13.20 g of diaminosulfonate and 52.65 g of water was added at 40 °C within 5 minutes and stirred for 20 minutes. A mixture of 20.81 g of IPDA and 130.59 g of water was added at 40 °C within 8 minutes. 238.1 g of water was added at 40 °C within 15 minutes and mixed for 5 minutes before acetone was distilled. The final dispersion was filtered through 260 micron filter.

Dispersion with a solid content of 59.18% by weight, viscosity of 1284 cps at 23 °C, pH of 7.77, and mean particle size of 739.6 nm was obtained.

### Comparative example 1.4:

The mixture of 188.14 g of Desmophen 1652, 198.6 g of PTHF 2000, 86.55 g of PTHF 1000 and 16.2 g of Polyether LB 25 was combined with 58.69 g of Desmodur I and 49.00 g of Desmodur H at 70 °C, heated up to 120 °C and stirred at 120 °C until a constant NCO value of 3.43% by weight was achieved. The prepolymer was dissolved with 1324.41 g of acetone below 90 °C and stirred for 20 minutes. A mixture of 1.23 g of hydrazine Hydrate, 13.20 g of diaminosulfonate and 52.65 g of water was added at 40 °C within 5 minutes and stirred for 20 minutes. A mixture of 20.81 g of IPDA and 130.59 g of water was added at 40 °C within 8 minutes. 277.4 g of water was added at 40 °C within 15 minutes and mixed for 5 minutes before acetone was distilled. The final dispersion was filtered through 260 micron filter.

Dispersion with a solid content of 60.69% by weight, viscosity of 901.8 cps at 23 °C, pH of 6.95, and mean particle size of 999.8 nm was obtained.

### Comparative example 1.5:

The mixture of 248.8 g of Desmophen C 2613, 11.3 g of Polyether LB 25, 9.9 g of DMPA and 6.5 g of Neopentylglycol were combined with 14.3 g of Desmodur I and 85.4 g of Desmodur W at 75 °C, heated up to 120 °C and stirred at 120 °C until a constant NCO value of 2.5% by weight was achieved. The prepolymer was dissolved with 609.1 g of acetone below 90 °C and stirred for 20 minutes. A mixture of 3.2 g of hydrazine Hydrate, 5.3 g of triethylamine, and 5.1 g of diethylenetriamine and 37.5 g of water was added at 40 °C within 5 minutes and stirred for 20 minutes before acetone was distilled. The final dispersion was filtered through 260 micron filter.

Dispersion with a solid content of 40.69%, viscosity of 223.8 cps at 23 °C, pH of 7.46, and mean particle size of 63.5 nm was obtained.

**Table 1: Results of testings**

| | **Exp. 1.1** | **Comp. Exp. 1.1** | **Comp. Exp. 1.2** | **Comp. Exp. 1.3** | **Comp. Exp. 1.4** | **Exp. 1.2** | **Exp. 2.1** | **Comp. Exp. 1.5** |
|---|---|---|---|---|---|---|---|---|
| **Thickness [mm]** | 0.2 ± 0.01 | | | | | | | |
| **Tensile strength [N/mm²]** | 27.97 | 16.01 | 10.02 | 10.1 | 5.63 | 23.73 | 13.05 | crack |
| **Elongation [%]** | 1617.11 | 985.93 | 897.84 | 1128.84 | 911.83 | 1337.67 | 1724.00 | crack |
| **100% Modulus [N/mm²]** | 1.66 | 2.00 | 2.04 | 1.43 | 1.37 | 1.97 | 0.71 | crack |

Comparative example 1.1 and comparative example 1.2 are using crystalized polycarbonates Desmophen C 2200 and Desmophen C 2613 respectively while example 1.1 is using amorphous polycarbonate Desmophen C 3200. By comparing with comparative example 1.1 and comparative example 1.2, example 1.1 has higher tensile strength and elongation but lower modulus.

Comparative example 1.3 and comparative example 1.4 are using amorphous polyesters PE 170 HN and Desmophen 1652 respectively. From the results, it can be found that their modulus decrease when amorphous polycarbonate is replaced by eq. mol of amorphous polyester while other compositions keep same, however, their tensile strength also reduces sharply, that is, their mechanical performance becomes worse compared with example 1.1.

Keep the same type of amorphous polycarbonate, we use short-chain or lower-molecular weight polycarbonate Desmophen C 3100 to replace Desmophen C 3200 and obtain example 1.2. Compared with that of comparative example 1.1 and comparative example 1.2 which contain crystal polycarbonate polyols, the modulus of example 1.2 reduces slightly and tensile strength enhances. Compared with higher-molecular amorphous polycarbonate polyol Desmophen C 3200, Desmophen C 3100 can't make the modulus lower efficiently. So it is better to use long-chain amorphous polycarbonate Desmophen C 3200 to efficiently achieve low modulus at the same time to have high tensile strength.

In addition to the above systems, we also can use Desmophen C 3200 to achieve low modulus and high tensile strength in other systems. Example 2.1 have a lower ratio of NCO to OH in prepolymer and lower modulus than that of example 1.1 and example 1.2. Example 2.1 contains Desmophen C 3200 and achieve lower modulus but higher tensile strength and elongation.

Therefore, no matter for high modulus system or for low modulus system, The amorphous polycarbonate polyols Desmophen C 3200 and Desmophen C 3100 make the PUDs to be the materials with low modulus but high tensile strength.

## Claims

1. Aqueous polyurethane-urea dispersion comprising at least one polyurethane-urea made of:
(A1) at least one polyisocyanate,
(A2) at least one polycarbonate polyol having a heat flow below 3J/g in the first circle of DSC testing from 20 to 100 °C according to testing method DIN 65467-1999,
(A3) optionally, at least one polyether polyol with an OH functionality of 1.8 to 2.2, preferably 2.0,
(A4) optionally, at least one compound having a molecular weight of 62 to 400 g/mol and possessing in total two or more hydroxyl and/or amino groups,
(A5) optionally, at least one isocyanate-reactive nonionically hydrophilicizing compound,
(A6) optionally, at least one isocyanate-reactive, ionically, or potentially ionically, hydrophilicizing compound,
(A7) optionally, at least one neutralizing reagents,
(A8) optionally, at least one additive.

2. Aqueous polyurethane dispersion according to claim 1, wherein component A2 has a number-average molecular weight of 1000 to 3000 g/mol.

3. Aqueous polyurethane dispersion according to claim 1 or 2, wherein component A2 has a hydroxyl number of 112 to 56 mg KOH/g.

4. Aqueous polyurethane dispersion according to any of claims 1 to 3, wherein component A2 has an OH functionality of 1.8 to 2.2.

5. Aqueous polyurethane dispersion according to any of claims 1 to 4, wherein components A1 to A8 are present in the following amounts:
(A1) 15 to 25% by weight, preferably 15 to 22 % by weight,
(A2) 15 to 67.5% by weight, preferably 15 to 50 % by weight,
(A3) 0 to 65% by weight, preferably 10 to 65 % by weight,
(A4) 0 to 5.5% by weight, preferably 0.1 to 4.0 % by weight,
(A5) 0 to 5.0% by weight, preferably 1.5 to 5.0% by weight, particularly preferably 1.5 to 3.0 % by weight,
(A6) 0 to 2.5% by weight, preferably 0.5 to 2.5% by weight, particularly preferably 0.1 to 1.5 % by weight,
(A7) 0 to 2.0% by weight, preferably 0.1 to 1.0 % by weight, and
(A8) 0 to 3 % by weight, preferably 0 to 2 % by weight,
wherein the sum of the amounts of (A1) to (A8) is 100% by weight in each case.

6. Aqueous dispersion according to any of claims 1 to 5, wherein the solids content of the polyurethane-urea dispersions is from 10 to 70% by weight, preferably 35 to 70% by weight, particularly preferably 50 to 60% by weight, in each case in respect of the whole dispersion.

7. Aqueous dispersion according to any of claims 1 to 6, wherein polyisocyanates or polyisocyanate blends based on 1,6-diisocyanatohexane (HDI), 1-isocyanato-3,3,5-trimethyl-5-isocyanatomethyl cyclohexane (isophorone diisocyanate, IPDI) and/or 4,4'-diisocyanatodicyclohexyl methane are used as component (A1).

8. Aqueous dispersion according to any of claims 1 to 7, wherein the polycarbonate polyols used as components (A2) are based on diols selected from the group consisting of 1,5-pentanediol, 1,6-hexanediol and mixtures thereof.

9. Aqueous dispersion according to claim 8, wherein a mixture 1,5-pentanediol and 1,6-hexandiol at a ratio of 35:65 to 50:50, preferably 40:60 to 50:50.

10. Aqueous dispersion according to any of claims 1 to 9, wherein component A3 is polytetrahydrofurane.

11. Process for the preparation of aqueous polyurethane-urea dispersion according to any of claims 1 to 10, by first reacting components (A1), (A2) and optionally components (A3), (A4), (A5), (A6) and (A7) to form a polyurethane prepolymer, then dispersing the polyurethane prepolymer in or by addition of water and then optionally reacting with or addition of (A8).

12. Process according to claim 11, wherein the NCO/OH ratio in the preparation of the polyurethane prepolymer is 1.2/1 to 2.8/1, preferably 1.4/1 to 2.5/1, more preferably 1.6/1 to 2.3/1 and most preferably 1.8/1 to 2.2/1.

13. Use of an aqueous polyurethane dispersion according to any of claims 1 to 10 as a coating composition.

14. Use according to claim 13, wherein woven and nonwoven textiles, leather, paper, hard fibre, straw, papery materials wood, and glass, all types of plastics, ceramics, stone, concrete, bitumen, porcelain, metals or glass fibres are coated, in particular flexible substrates, with textiles and leather being particularly preferred.
